# EUROPEAN PATENT SPECIFICATION

(11) **EP 1 609 644 B1**
(45) Date of publication and mention of the grant of the patent: **26.08.2009**
(21) Application number: 05013139.0
(22) Date of filing: 17.06.2005
(51) Int. Cl.: B60H 3/00, B60H 1/24

(54) **Dust reducing apparatus**
Staubreduzierende Einrichtung
Appareil de réduction de poussière

(30) Priority: 21.06.2004 JP 2004182225
(43) Date of publication of application: 28.12.2005
(73) Proprietor: Toyota Jidosha Kabushiki Kaisha, Toyota-shi, Aichi-ken, 471-8571 (JP)
(72) Inventor: Kato, Yasushi, Toyota-shi, Aichi-ken, 471-8571 (JP); Takeda, Hironobu, Toyota-shi, Aichi-ken, 471-8571 (JP)
(74) Representative: Winter, Brandl, Fürniss, Hübner Röss, Kaiser, Polte Partnerschaft Patent- und Rechtsanwaltskanzlei

(56) References cited:
- EP-A- 1 217 317
- DE-A1- 3 744 500
- DE-A1- 10 241 571
- US-A- 5 090 301

## Description

### BACKGROUND OF THE INVENTION

### Field of the Invention

The present invention relates to a dust reducing apparatus for reducing the amount of dust types such as pollen inside the cabin of a vehicle such as an automobile.

### Description of the Related Art

In recent years, an in-vehicle air conditioner for preventing the ingress of pollen into the vehicle cabin of an automobile has been considered as a measure to counter hay fever (pollen allergy), for which the number of sufferers is growing (e.g., see Japanese Patent Application Laid-Open Publication (JP-A) No. 8-310230). In this in-vehicle air conditioner, the downstream portion of an outside air inlet port in an air conditioner duct is divided into first and second air intake paths, and a filter for removing pollen is disposed in the second air intake path. An outside air switching door for selectively guiding the outside air taken in from the outside air inlet port to the first air intake path or the second air intake path is disposed inside the air conditioner duct.

The outside air switching door is controlled, on the basis of signals from a rain drop detection sensor and a magnetic detection sensor, to be positioned at a position to guide the outside air to the filter for removing pollen in periods when the skies are clear or cloudy and when pollen, which is the causative agent of hay fever, is dispersed in the outside air. Thus, because the outside air inlet port of the in-vehicle air conditioner passes through the filter for removing pollen, clean air from which the pollen in the outside air has been removed is blown into the vehicle cabin, and the amount of pollen in the vehicle cabin is reduced.

In addition to the above configuration, JP-A No. 8-310230 also discloses an in-vehicle air conditioner in which a filter for removing pollen is also disposed downstream of an inside air inlet port in the air conditioner duct. In this configuration, not only is the pollen included in the outside air removed, but the pollen included in the inside air is also effectively trapped (removed).

However, in an automobile to which this conventional in-vehicle air conditioner is applied as described above, the conventional in-vehicle air conditioner is unable to prevent the ingress of pollen through the door opening when the door opening is opened as a person enters or exits the vehicle.

Document EP-A-1 217 317 discloses a dust reducing apparatus according to the preamble of claim 1.

### SUMMARY OF THE INVENTION

In view of the above circumstances, the present invention provides a dust reducing apparatus that can restrict the ingress of dust types such as pollen into the vehicle cabin through the door opening.

A first aspect of the invention provides a dust reducing apparatus that forms, along a door opening disposed in a vehicle body of a vehicle, an air curtain dividing the inside of a vehicle cabin from the outside when the door opening is open.

In the dust reducing apparatus of the first aspect, when the door opens the door opening in the vehicle body, for example, as a passenger enters or exits the vehicle, the dust reducing apparatus divides the inside of the vehicle cabin from the outside by forming the air curtain along the door opening. Thus, dust types such as pollen included in the air outside the vehicle cabin are prevented from ingressing into the vehicle cabin through the door opening.

In this manner, the dust reducing apparatus of the first aspect can restrict the ingress of dust types such as pollen into the vehicle cabin through the door opening.

A second aspect of the invention provides a dust reducing apparatus including: an air blowout portion that is disposed along an edge portion of a door opening in a vehicle body of a vehicle, which door opening is opened and closed by a door, with the air blowout portion blowing out air to form an air curtain that divides the inside of a vehicle cabin from the outside; an air supplier that supplies air to the air blowout portion; and a controller that causes air to be supplied to the air blowout portion from the air supplier when the door opening is opened.

In the dust reducing apparatus of the second aspect, when the door opens the door opening in the vehicle body, for example, as a person enters or exits the vehicle, the controller causes air to be supplied from the air supplier to the air blowout portion. When this happens, the air blown out from the air blowout portion forms the air curtain, and the inside of the vehicle cabin is separated from the outside by the air curtain. Thus, dust types such as pollen included in the air outside the vehicle cabin are prevented from ingressing into the vehicle cabin through the door opening.

In this manner, the dust reducing apparatus of the second aspect can restrict the ingress of dust types such as pollen into the vehicle cabin through the door opening.

A third aspect of the invention provides a dust reducing apparatus including an air nozzle that is disposed in a vehicle and blows out air to the outside of the vehicle body to remove dust types adhering to the clothes of a person about to enter the vehicle.

In the dust reducing apparatus of the third aspect, a person about to enter the vehicle showers himself/herself with the air blown out (emitted) from the air nozzle to remove dust types adhering to the person's clothes. Thus, dust types adhering to the clothes of the person are prevented from ingressing into the vehicle cabin through the door opening as the person enters the vehicle.

In this manner, the dust reducing apparatus of the third aspect can restrict the ingress of dust types such as pollen into the vehicle cabin through the door opening. It will be noted that it is preferable for the air blown out from the air nozzle to be compressed air of a compressor and the like or an air tank.

As described above, the dust reducing apparatus pertaining to the present invention has the excellent effect that it restricts the ingress of dust types such as pollen into the vehicle cabin through the door opening.

### BRIEF DESCRIPTION OF THE DRAWINGS

FIG. 1 is a perspective view showing a state where an air curtain forming apparatus pertaining to a first embodiment of the invention forms an air curtain;
FIG. 2 is a block diagram showing the schematic overall configuration of the air curtain forming apparatus pertaining to the first embodiment of the invention;
FIG. 3 is a perspective view showing an air blowing portion configuring the air curtain forming apparatus pertaining to the first embodiment of the invention;
FIG. 4 is a block diagram showing the schematic overall configuration of an air curtain forming apparatus pertaining to a second embodiment of the invention;
FIG. 5 is a perspective view showing the schematic disposition of a compressor and an air tank configuring the air curtain forming apparatus pertaining to the second embodiment of the invention;
FIG. 6 is a perspective view showing an air shower apparatus pertaining to a third embodiment of the invention; and
FIG. 7 is a perspective view showing an air shower apparatus pertaining to a fourth embodiment of the invention.

### DETAILED DESCRIPTION OF THE INVENTION

### First Embodiment

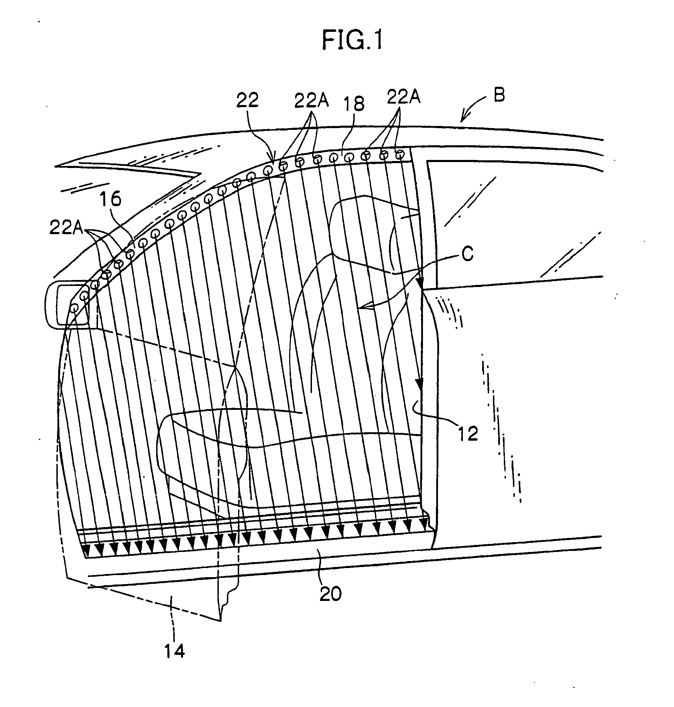

An example where an air curtain forming apparatus 10 serving as a dust reducing apparatus pertaining to a first embodiment of the invention is applied to an automobile serving as a vehicle will be described on the basis of FIGS. 1 to 3.

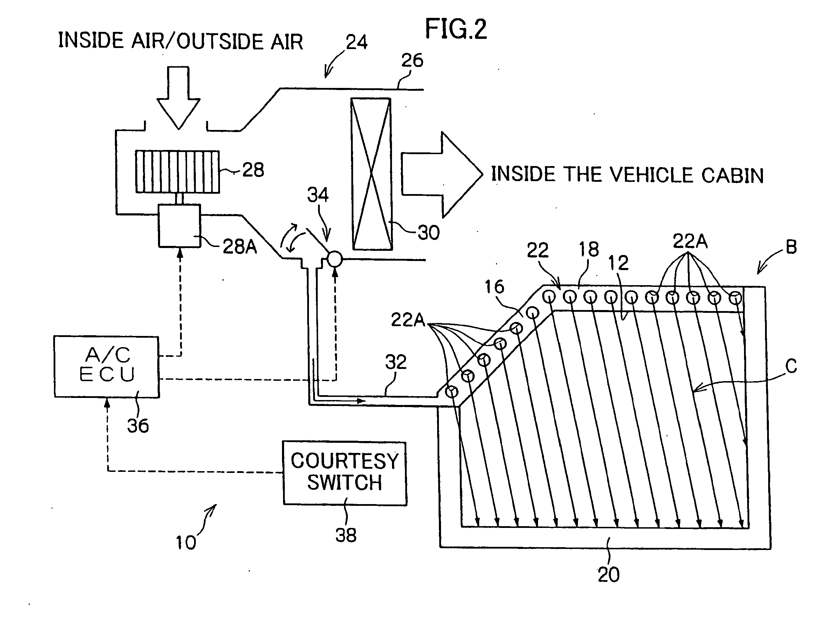

FIG. 1 is a perspective view showing the operating state of an air curtain forming apparatus 10, and FIG. 2 is a block diagram showing the schematic overall configuration of the air curtain forming apparatus 10. As shown in these drawings, the air curtain forming apparatus 10 forms an air curtain C along the open surface of a door opening 12 that communicates the inside and outside of a vehicle cabin in a vehicle body B of an automobile. The inside of the vehicle cabin is divided (demarcated) from the outside by the air curtain C when the door opening 12 is open.

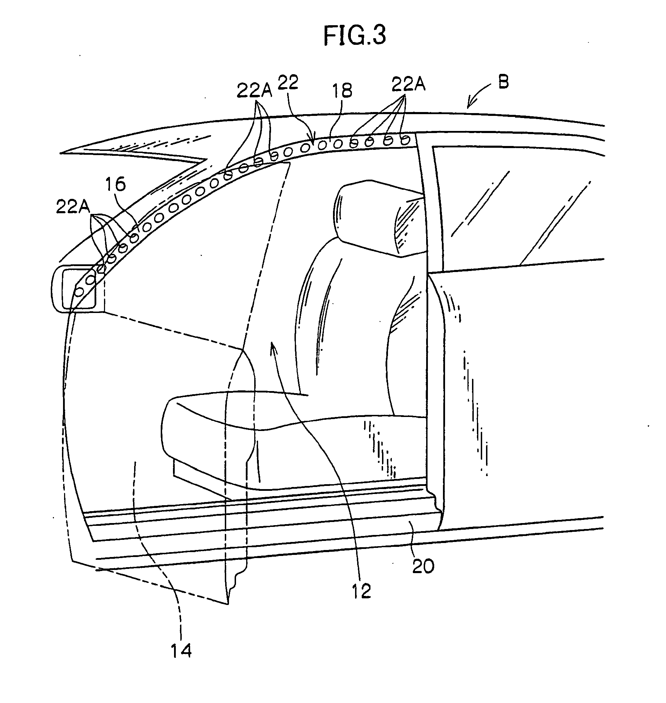

As shown in FIG. 3, in the first embodiment, the door opening 12 in the vehicle body B of the automobile is configured to be opened and closed by a door 14. The upper edge of the door opening 12 is defined by an A-pillar 16 and a roof side rail 18, and the lower edge of the door opening 12 is defined by a floorboard (side sill) 20.

The air curtain forming apparatus 10 includes an air blowout portion 22 disposed in the A-pillar 16 and the roof side rail 18. The air blowout portion 22 is configured by numerous blowout holes 22A that are disposed along the longitudinal direction of the A-pillar 16 and the roof side rail 18, which have a hollow configuration (not shown). In the first embodiment, the insides of the A-pillar 16 and the roof side rail 18 are mutually communicated. The air blowout portion 22 is configured to form the air curtain C that divides the inside of the vehicle cabin from the outside by blowing out air simultaneously and continuously from the numerous blowout holes 22A towards the floorboard 20. The air blowout portion 22 may also be configured by a single or plural slits disposed along the longitudinal direction of the A-pillar 16 and the roof side rail 18.

The air curtain forming apparatus 10 is configured to supply air to the air blowout portion 22 from an in-vehicle air conditioner 24. The in-vehicle air conditioner 24 includes an air conditioning blower 28 that is disposed inside an air conditioning duct 26 into which inside air or outside air is introduced. Air that has been conditioned through an internal heat exchanger 30 such as an evaporator and a heater core is blown to the inside of the vehicle cabin by the operation of the air conditioning blower 28.

The air curtain forming apparatus 10 also includes an air supply path 32 that communicates the air conditioning duct 26 and the air blowout portion 22 (the insides of the A-pillar 16 and the roof side rail 18). The air supply path 32 may be configured by a flexible pipe member such as a hose or tube in which one end is connected to the air conditioning duct 26 and the other end is connected to the lower portion or the upper portion of the A-pillar 16, for example. Part of the air supply path 32 may also be configured by using a hollow configural member of the vehicle body B.

The air curtain forming apparatus 10 also includes a switch 34 that selectively switches between a state where the air conditioning duct 26 and the air blowout portion 22 are mutually communicated and a state where the communication between the air conditioning duct 26 and the air blowout portion 22 is blocked. Namely, the switch 34 is disposed at an end portion or intermediate portion of the air supply path 32 and functions as an open/close valve that opens and closes the air supply path 32. Thus, the air curtain forming apparatus 10 is configured to prevent the air blown by the air conditioning blower 28 from being supplied to the air blowout portion 22 when it is not necessary to form the air curtain C.

The air curtain forming apparatus 10 described above is controlled by an air conditioning ECU 36 that includes the function of a controller in the present invention so that the air curtain forming apparatus 10 forms the air curtain C when the door opening 12 is opened as a person enters or exits the vehicle. The air conditioning ECU 36 is electrically connected to a drive motor 28A of the air conditioning blower 28 and configured to conduct ordinary control of the in-vehicle air conditioner 24. Description of this control will be omitted.

In the first embodiment, the air conditioning ECU 36 is electrically connected to the switch 34 and a courtesy switch 38. The courtesy switch 38 outputs a signal (may be an ON/OFF signal) corresponding to the opening and closing of the door opening 12 by the door 14 in order to turn ON a light inside the vehicle when the door 14 is operated. The courtesy switch 38 corresponds to a door open/close detector in the present invention.

When a signal (called an "open signal" below) corresponding to the fact that the door opening 12 has been opened is inputted to the air conditioning ECU 36 from the courtesy switch 38, the air conditioning ECU 36 drives the drive motor 28A to activate the switch 34 and open the air supply path 32. Thus, the air blown by the air conditioning blower 28 is continuously supplied from the in-vehicle air conditioner 24 to the air blowout portion 22, and the air curtain C is formed.

When a signal (called a "close signal" below) corresponding to the fact that the door opening 12 has been closed is inputted to the air conditioning ECU 36 from the courtesy switch 38, the air conditioning ECU 36 stops the drive motor 28A to switch the switch 34 and block (close) the air supply path 32. When the door opening 12 is closed during the operation of the in-vehicle air conditioner 24, the driven state of the drive motor 28A is maintained and the strength of the blowing is controlled. When the door opening 12 is opened, the strength of the blowing is controlled so that more than the ordinary amount of air is supplied for the air curtain C.

The air blowout portion 22, the air supply path 32, the switch 34 and the courtesy switch 38 described above are disposed in each door opening 12 (i.e., in correspondence to the number of door openings 12) in the vehicle body B of the automobile, and form air curtains C in the door openings 12, respectively, that are opened as a person enters or exits the vehicle.

Next, the operation of the first embodiment will be described.

In an automobile to which the air curtain forming apparatus 10 of the above configuration has been applied, when the door 14 is moved to the open position and the door opening 12 is opened as a person enters the automobile, the open signal is inputted to the air conditioning ECU 36 from the courtesy switch 38. When this happens, the air conditioning ECU 36 drives the drive motor 28A to activate the air conditioning blower 28, the switch 34 corresponding to the opened door opening 12 is activated, and the air supply path 32 is opened. Thus, the air supplied from the air conditioning duct 26 to the air blowout portion 22 via the air supply path 32 is continuously blown out from the blowout holes 22A as shown in FIG. 1, and the air curtain C is formed in the opened door opening 12.

Because the inside of the vehicle cabin is divided from the outside by the air curtain C, the air outside the vehicle cabin, namely pollen (dust types) flying in the air outside the vehicle cabin, is prevented from ingressing into the vehicle cabin via the opened door opening 12. The action of a person entering the automobile is also uninhibited because the air curtain C divides the inside of the vehicle cabin from the outside. When the door 14 is moved to the open position and the door opening 12 is opened as a person exits the vehicle, the air curtain C is formed in the same manner as when a person enters the automobile, and pollen (dust types) flying in the air outside the vehicle cabin is prevented from ingressing into the vehicle cabin via the door opening 12. The air curtain C also does not inhibit the action of a person exiting the automobile.

When the door 14 is moved to the closed position and the door opening 12 is closed, the close signal is inputted to the air conditioning ECU 36 from the courtesy switch 38, and the air conditioning ECU 36 stops the drive motor 28A to activate the switch 34 and block the air supply path 32. Thus, the air curtain C is no longer formed, and the air conditioning blower 28 is switched to the state where it is used (only) for the in-vehicle air conditioner 24.

In this manner, in the air curtain forming apparatus 10 pertaining to the first embodiment, the ingress of pollen into the vehicle cabin through the door opening 12 can be restricted, and the amount of pollen inside the vehicle cabin of the automobile to which the air curtain forming apparatus 10 has been applied can be reduced.

Also, in the air curtain forming apparatus 10, the air curtain C is formed using the air blown by the air conditioning blower 28 of the in-vehicle air conditioner 24. Thus, the function of restricting the ingress of pollen into the vehicle cabin through the door opening 12 is realized without having to dispose a dedicated blower.

Moreover, the air blowout portion 22 is disposed along the A-pillar 16 and the roof side rail 18 configuring the upper edge of the door opening 12, and the air curtain C is formed by blowing out the air mainly downward. Thus, the air current of the air curtain C does not directly strike the face of the person entering or exiting the automobile. For this reason, the person entering or exiting the automobile is prevented from experiencing a sense of displeasure.

Additionally, because the period of operation of the air curtain forming apparatus 10 is controlled on the basis of the signal inputted from the courtesy switch 38, the air curtain forming apparatus 10 operates and forms the air curtain C only when the door opening 12 is opened, when there is the potential for pollen to ingress into the vehicle cabin, whereby the ingress of pollen into the vehicle cabin can be reliably prevented.

In the first embodiment, a configuration is described where the air curtain forming apparatus 10 is controlled by the air conditioning ECU 36, but the invention is not limited to this. For example, the air curtain forming apparatus 10 may also be controlled by a dedicated controller that is partially or completely independent from the air conditioning ECU 36.

### Second Embodiment

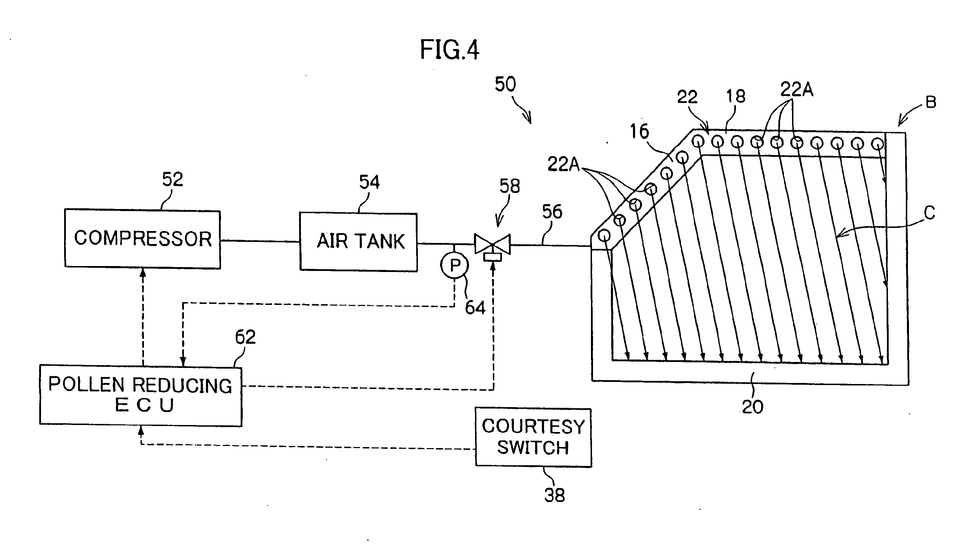

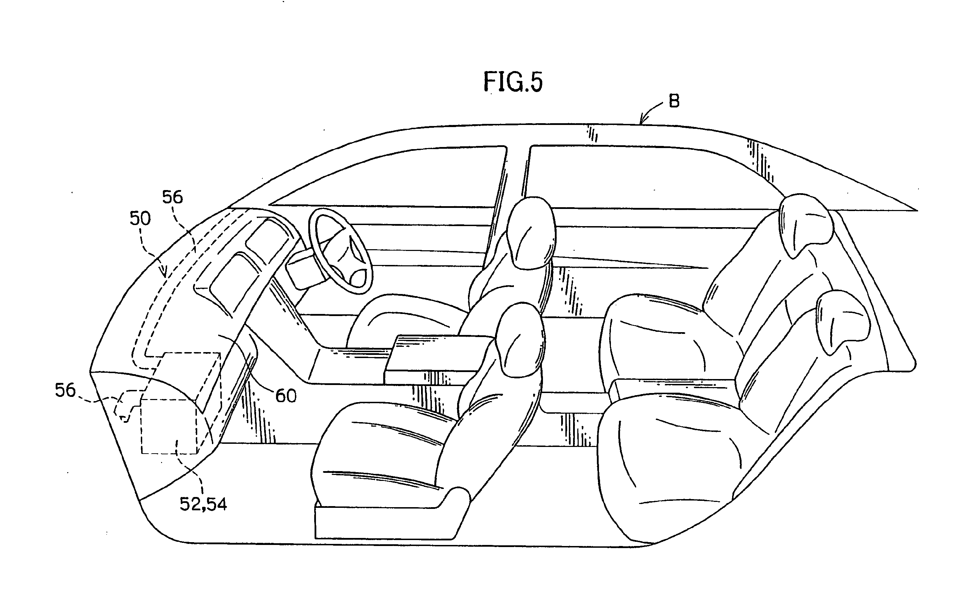

An air curtain forming apparatus 50 serving as a dust reducing apparatus pertaining to a second embodiment of the invention will be described on the basis of FIGS. 4 and 5. The same reference numerals will be given to parts/members that are basically the same as those of the first embodiment, and description of those parts/members will be omitted.

FIG. 4 is a block diagram showing the schematic overall configuration of the air curtain forming apparatus 50. As shown in FIG. 4, the air curtain forming apparatus 50 is similar to the air curtain forming apparatus 10 in that the air curtain C is formed by the air blown out from the air blowout portion 22 disposed along the upper edge of the door opening 12, but is different from the air curtain forming apparatus 10 in that the air curtain C is formed using compressed air. This will be described in greater detail below.

The air curtain forming apparatus 50 includes a compressor 52, which is a compressed air source, and an air tank 54, which is communicated with the compressor 52 and accumulates the compressed air supplied from the compressor 52. The air tank 54 is communicated with the air blowout portion 22 (the inside spaces of the A-pillar 16 and the roof side rail 18) via an air hose 56. An electromagnetic open/close valve 58 is disposed in the air hose 56. By opening and closing the air hose 56, the air hose 56 is selectively switched between a state where the air tank 54 and the air blowout portion 22 are mutually communicated and a state where the communication between the air tank 54 and the air blowout portion 22 is blocked.

As shown in FIG. 5, the compressor 52 and the air tank 54 are disposed inside an installment panel 60 of the automobile. Similar to the first embodiment, the air blowout portion 22, the air hose 56 and the electromagnetic open/close valve 58 are disposed in correspondence to the number of doors. The electromagnetic open/close valve 58 may be disposed inside the installment panel 60 or in the vicinity of the corresponding door opening 12.

The air curtain forming apparatus 50 also includes a pollen reducing ECU 62. The pollen reducing ECU 62 is electrically connected to the compressor 52, the electromagnetic open/close valve 58, the courtesy switch 38 and a pressure sensor 64. The pressure sensor 64 is disposed in the air tank 54 itself or between the air tank 54 and the electromagnetic open/close valve 58 in the air hose 56, and is configured to output a signal corresponding to the pressure in the air tank 54 to the pollen reducing ECU 62.

The air curtain forming apparatus 50 is configured to activate the compressor 52 and maintain the air pressure inside the air tank 54 at a pressure equal to or greater than a predetermined pressure when the pressure signal inputted from the pressure sensor 64 is a signal corresponding to the fact that the pressure inside the air tank 54 is less than the predetermined pressure. In the second embodiment, the compressor 52 is electrically operated and drivable independent from the engine. Also, when the open signal is inputted to the pollen reducing ECU 62 from the courtesy switch 38, the pollen reducing ECU 62 switches the electromagnetic open/close valve 58 to the open state, and when the close signal is inputted to the pollen reducing ECU 62 from the courtesy switch 38, the pollen reducing ECU 62 switches the electromagnetic open/close valve 58 to the closed state. It will be noted that there are also instances where the compressor 52 operates even during the opening of the electromagnetic open/close valve 58.

Next, the operation of the second embodiment will be described.

In an automobile to which the air curtain forming apparatus 50 of the above configuration has been applied, compressed air that is equal to or greater than the predetermined pressure accumulates inside the air tank 54. When the door 14 is moved to the open position and the door opening 12 is opened as a person enters the automobile, the open signal is inputted to the pollen reducing ECU 62 from the courtesy switch 38. When this happens, the pollen reducing ECU 62 switches the electromagnetic open/close valve 58 corresponding to the opened door opening 12, i.e., the air hose 56, to the open state. Thus, the air supplied from the air tank 54 to the air blowout portion 22 via the air hose 56 is continuously blown out from the blowout holes 22A as shown in FIG. 4, and the air curtain C is formed in the opened door opening 12.

Because the inside of the vehicle cabin is divided from the outside by the air curtain C, the air outside the vehicle cabin, namely pollen (dust types) flying in the air outside the vehicle cabin, is prevented from ingressing into the vehicle cabin via the opened door opening 12. The action of a person entering the automobile is also uninhibited because the air curtain C divides the inside of the vehicle cabin from the outside. When the door 14 is moved to the open position and the door opening 12 is opened as a person exits the vehicle, the air curtain C is formed in the same manner as when a person enters the automobile described above, and pollen (dust types) flying in the air outside the vehicle cabin is prevented from ingressing into the vehicle cabin via the door opening 12. The air curtain C also does not inhibit the action of a person exiting the automobile.

When the door 14 is moved to the closed position and the door opening 12 is closed, the close signal is inputted to the pollen reducing ECU 62 from the courtesy switch 38, and the pollen reducing ECU 62 switches the electromagnetic open/close valve 58 to the closed state. Thus, the air curtain C is no longer formed, and the electromagnetic open/close valve 58 is switched to the state where the compressed air inside the air tank 54 is maintained.

In this manner, in the air curtain forming apparatus 50 pertaining to the second embodiment, the ingress of pollen into the vehicle cabin through the door opening 12 can be restricted, and the amount of pollen inside the vehicle cabin of the automobile to which the air curtain forming apparatus 50 has been applied can be reduced.

Also, in the air curtain forming apparatus 50, the air curtain C is formed using the compressed air. Thus, an air curtain C that is strong in comparison to a configuration using a blower as the air source can be formed. For this reason, the ingress of pollen into the vehicle cabin can be effectively restricted even when the door opening 12 is opened in an environment where there are strong winds. Also, because the air curtain forming apparatus 50 includes the dedicated compressor 52 as the air source, the setting of the specifications (blowout pressure, blowout speed, blowout volume, etc.) of the air curtain C is easy. In particular, because the air curtain forming apparatus 50 includes the air tank 54, the capacity of the compressed air is ensured, and a sufficiently strong air curtain can be formed over a predetermined period of time (i.e., the formed state can be maintained). Also, because it is not necessary to start the compressor 52 when the door opening 12 is opened, the air curtain C is rapidly formed at substantially the same time as when the door opening 12 is opened. Moreover, air curtains C having a sufficient strength can be reliably formed in each of the door openings 12 even when plural door openings 12 are opened at the same time. Thus, the ingress of pollen into the vehicle cabin can be reliably prevented.

Moreover, the air blowout portion 22 is disposed along the A-pillar 16 and the roof side rail 18 configuring the upper edge of the door opening 12, and the air curtain C is formed by blowing out the air mainly downward. Thus, the air current of the air curtain C does not directly strike the face of the person entering or exiting the automobile. For this reason, the person entering or exiting the automobile is prevented from experiencing a sense of displeasure. Additionally, because the period of operation of the air curtain forming apparatus 50 is controlled on the basis of the signal inputted from the courtesy switch 38, the air curtain forming apparatus 50 operates and forms the air curtain C only when the door opening 12 is opened, when there is the potential for pollen to ingress into the vehicle cabin, whereby the ingress of pollen into the vehicle cabin can be reliably prevented.

In the second embodiment, a configuration is described where the air curtain forming apparatus 50 includes the air tank 54, but the invention is not limited to this. For example, the compressed air of the compressor 52 may also be directly supplied to the air blowout portion 22. Also, the pollen reducing ECU 62 is not limited to a dedicated controller and may also be configured so that it is incorporated in a control circuit of an in-vehicle air conditioner having a pollen reducing function and is cooperatively controlled with these. Also, the present invention is not limited by the disposition of the compressor 52 and the air tank 54.

### Third Embodiment

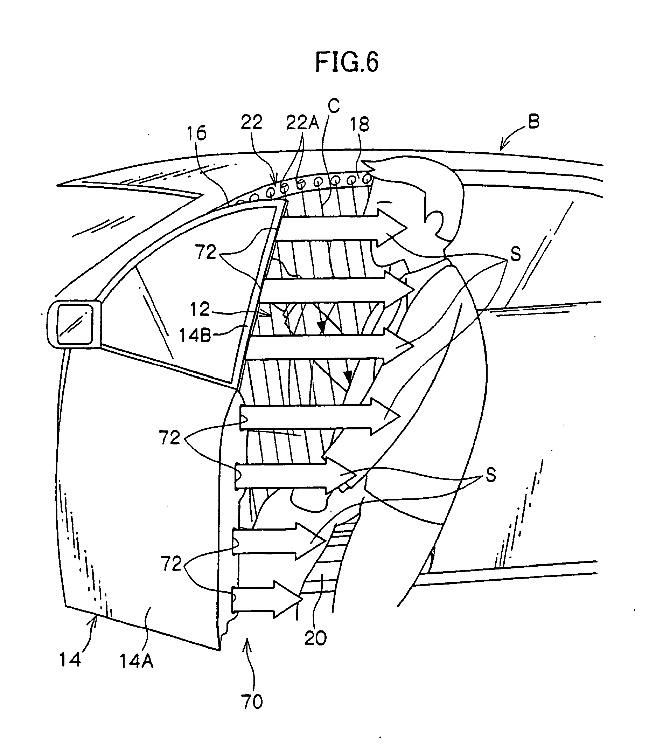

An air shower apparatus 70 serving as a dust reducing apparatus pertaining to a third embodiment of the invention will be described on the basis of FIG. 6. The same reference numerals will be given to parts/members that are the same as those of the first and second embodiments, and description of those parts/members will be omitted.

FIG. 6 is a perspective view showing an operating state of the air shower apparatus 70. As shown in FIG. 6, the air shower apparatus 70 blows, onto a person about to enter the vehicle, an air shower that is an air current directed to the outside of the vehicle cabin, and is configured to blow off pollen adhering to the clothes and the like of the person about to enter the vehicle.

The air shower apparatus 70 includes air nozzles 72 that open to the rear end of the door 14. Air blown out from the air nozzles 72 forms an air shower S. The air nozzles 72 are plurally disposed along the vertical direction at the rear end of a door body 14A with a hollow configuration (not shown) and the rear end of a door sash 14B. The air nozzles 72 form the air shower S across a wide range from the upper portion (head) to the lower portion (feet) of a person.

In the third embodiment, the air shower apparatus 70 is applied to the automobile together with the air curtain forming apparatus 50, and is configured so that the compressed air is supplied from the air tank 54 to the air nozzles 72 through an unillustrated air supply path. The air supply path is divided from the air hose 56 downstream of the electromagnetic open/close valve 58. Thus, the compressed air is automatically blown out from the air nozzles 72 in the door 14 positioned in the open position opening the door opening 12, whereby the air shower S is formed. The air supply path, which communicates the air tank 54 disposed in the vehicle body and the air nozzles 72 in the door 14, can be configured in the same manner as a known configuration that guides the conditioned air of the air conditioner disposed in the vehicle body to the side portion of the vehicle cabin through the inside of the door 14.

Next, the operation of the third embodiment will be described.

In an automobile to which the air shower apparatus 70 of the above configuration has been applied together with the air curtain forming apparatus 50, when the door 14 is moved to the open position and the door opening 12 is opened as a person enters the automobile, the open signal is inputted to the pollen reducing ECU 62 from the courtesy switch 38. When this happens, the pollen reducing ECU 62 switches the electromagnetic open/close valve 58 corresponding to the opened door opening 12, i.e., the air hose 56, to the open state. Thus, the air supplied from the air tank 54 to the air blowout portion 22 via the air hose 56 is continuously blown out from the blowout holes 22A, and the air curtain C is formed in the opened door opening 12. Also, the air flowing through the divided air supply path from the air hose 56 is blown out from the air nozzles 72 to form the air shower S. A person about to enter the vehicle stands at the position where the person is showered with this air shower S, and pollen adhering to the clothes and body surfaces of the person is blown away by the air shower S while the person appropriately changes his/her posture.

Thereafter, the person enters the vehicle through the door opening 12 in which the air curtain C is formed, moves the door 14 to the closed position, and closes the door opening 12. When this happens, the close signal is inputted to the pollen reducing ECU 62 from the courtesy switch 38, and the pollen reducing ECU 62 switches the electromagnetic open/close valve 58 to the closed state. Thus, the air curtain C and the air shower S are no longer formed, and the electromagnetic open/close valve 58 is switched to the state where the compressed air inside the air tank 54 is maintained.

In this manner, in the air shower apparatus 70 pertaining to the third embodiment, the ingress of pollen adhering to the person into the vehicle cabin through the door opening 12 (i.e., the pollen that the person brings into the vehicle cabin) can be restricted, and the amount of pollen inside the vehicle cabin of the automobile to which the air shower apparatus 70 has been applied can be reduced. Also, because the air shower apparatus 70 includes the plural air nozzles 72 along the vertical direction at the rear edge portion of the door 14, pollen adhering to portions of the person in the vertical direction from the portions that are close to the person's face and relatively high to the portions that are close to the person's feet and relatively low can be effectively removed without the person having to move too much.

Moreover, because the air shower apparatus 70 is applied to the automobile together with the air curtain forming apparatus 50, pollen flying (dispersed) through the air outside the vehicle cabin can be reliably prevented from ingressing into the vehicle cabin. It will be noted that description of the effects of the air curtain forming apparatus 50 will be omitted here because they are the same as those which are described in the second embodiment.

In the third embodiment, a configuration is described where the air nozzles 72 are disposed across substantially the entire height of the rear end of the door 14, but the present invention is not limited to this. The air nozzles 72 may also be disposed simply along part of the rear end of the door 14 in the vertical direction. Also, the site at which the air shower S is blown out is not limited to the rear end of the door 14. For example, the air shower S may also be blown out from the upper portion of the door trim. Moreover, means for switching the direction in which the air is blown out, such as a louver, may also be disposed in the air shower.

### Fourth Embodiment

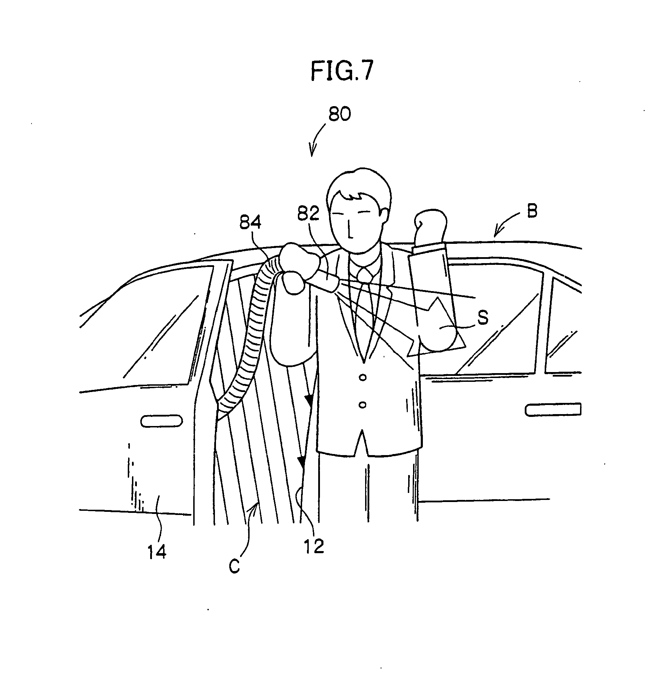

An air shower apparatus 80 serving as a dust reducing apparatus pertaining to a fourth embodiment of the invention will be described on the basis of FIG. 7. The same reference numerals will be given to parts/members that are the same as those of the first to third embodiments, and description of those parts/members will be omitted.

FIG. 7 is a perspective view showing an operating state of the air shower apparatus 80. As shown in FIG. 7, the air shower apparatus 80 is similar to the air shower apparatus 70 in that it blows, onto a person about to enter the vehicle, an air shower S that is an air current directed to the outside of the vehicle cabin, but is different from the air shower apparatus 70 in that the air shower apparatus 80 is disposed with a detachable air nozzle 82.

The air nozzle 82 is fixed to the end of a flexible air hose 84, and is configured to be attachable to and detachable from a retaining portion (not shown) disposed on the inner surface of the door 14. It is preferable for the air hose 84 to be storable inside the door body 14A in a state where the air nozzle 82 is retained in the door 14. The air shower apparatus 80 is configured so that a person about to enter the vehicle grasps the air nozzle 82 and uses the air shower S to blow away pollen adhering to the clothes and body surfaces of the person.

The air shower apparatus 80 is applied to an automobile together with the air curtain forming apparatus 50, and blows out the compressed air supplied from the air tank 54 through the air nozzle 82 to form the air shower S. Namely, the air hose 84 (air nozzle 82) is connected to the air tank 54 by an air supply path similar to that of the air nozzles 72 pertaining to the third embodiment.

Also, in the fourth embodiment, an electromagnetic open/close valve is disposed separately from the electromagnetic open/close valve 58 in the air supply path, and a switch that switches between opening and closing the electromagnetic open/close valve is disposed at a position on the air nozzle 82 where the electromagnetic open/close valve can be easily operated by the person grasping the air nozzle 82. The electromagnetic open/close valve is configured to ordinarily close the air supply path and open the air supply path when the switch is operated. Thus, when the door opening 12 is opened, the electromagnetic switch 58 opens so that the compressed air can be supplied to the air nozzle 82. The air shower S is blown out through the air nozzle 82 by manually operating the switch thereafter.

Next, the operation of the fourth embodiment will be described.

In an automobile to which the air shower apparatus 80 of the above configuration has been applied together with the air curtain forming apparatus 50, when the door 14 is moved to the open position and the door opening 12 is opened as a person enters the automobile, the open signal is inputted to the pollen reducing ECU 62 from the courtesy switch 38. When this happens, the pollen reducing ECU 62 switches the electromagnetic open/close valve 58 corresponding to the opened door opening 12, i.e., the air hose 56, to the open state. Thus, the air supplied from the air tank 54 to the air blowout portion 22 via the air hose 56 is continuously blown out from the blowout holes 22A, and the air curtain C is formed in the opened door opening 12. Also, the air flowing through the divided air supply path from the air nozzle 56 is blown out from the air nozzles 72 to form the air shower S.

Then, a person about to enter the vehicle pulls out the air hose 84 from the door body 14A, removes the air nozzle 82 from the retaining portion of the door 14, and operates the switch disposed in the air nozzle 82, whereby the compressed air is blown out from the air nozzle 82 and the air shower S is formed. The person about to enter the vehicle showers himself/herself with the shower S while appropriately changing the position and orientation of the air nozzle 82 with respect to the person's body, so that pollen adhering to the clothes and body surfaces of the person is blown away by the air shower S.

Thereafter, the person enters the vehicle through the door opening 12 in which the air curtain C is formed, moves the door 14 to the closed position, and closes the door opening 12. When this happens, the close signal is inputted to the pollen reducing ECU 62 from the courtesy switch 38, and the pollen reducing ECU 62 switches the electromagnetic open/close valve 58 to the closed state. Thus, the air curtain C and the air shower S are no longer formed, and the electromagnetic open/close valve 58 is switched to the state where the compressed air inside the air tank 54 is maintained.

In this manner, in the air shower apparatus 80 pertaining to the fourth embodiment, the ingress of pollen adhering to the person into the vehicle cabin through the door opening 12 (i.e., the pollen that the person brings into the vehicle cabin) can be restricted, and the amount of pollen inside the vehicle cabin of the automobile to which the air shower apparatus 80 has been applied can be reduced. Also, because the air shower apparatus 80 includes the air nozzle 82 that can be attached to and detached from the door 14 and the air shower S can be formed from the air nozzle 82 detached from the door 14, the person about to enter the vehicle can shower himself/herself with the air shower S from the air nozzle 82 by moving the air nozzle 82 to a desired orientation and position, and pollen adhering to portions of the person such as the clothes and body portions can be effectively removed.

Moreover, because the air shower apparatus 80 is applied to the automobile together with the air curtain forming apparatus 50, pollen flying (dispersed) through the air outside the vehicle cabin can be reliably prevented from ingressing into the vehicle cabin. It will be noted that description of the effects of the air curtain forming apparatus 50 will be omitted here because they are the same as those which are described in the second embodiment.

In the third and fourth embodiments, a configuration is described where the air shower apparatus 70 and 80 shares the air source with the air curtain forming apparatus 50, but the present invention is not limited to this. The air shower apparatus 70 and 80 may also be configured to have an independent air source. Also, simply the air shower apparatus 70 or the air shower apparatus 80 may be applied to the automobile without disposing the air curtain forming apparatus 50. Moreover, the air shower apparatus 70 or the air shower apparatus 80 may be applied together with the air curtain forming apparatus 10. Also, a switch for manually switching the air shower S ON and OFF may be disposed in the air shower apparatus 70, and the air shower S may be ordinarily blown out from the air nozzle 82 of the air shower apparatus 80 when the door opening 2 is open.

Also, in the preceding embodiments, a configuration is described where the door 14 opening and closing the door opening 12 of the vehicle body B is a hinged door, but the present invention is not limited to this. For example, the door opening 12 may also be opened and closed by a sliding door. Also, the door opening 12 is not limited to being a door opening for a person to enter or exit the vehicle. For example, the air curtain forming apparatus 10 or 50 may also be applied to a back door opening that is opened and closed by a back door.

Moreover, in the preceding embodiments, an example is described where the ingress of dust types such as pollen into the vehicle cabin is restricted, but the ingress of various dust types other than pollen dispersed in the air or flying through the air into the vehicle cabin can be restricted by the above apparatus.

The dust reducing apparatus pertaining to the invention can form the air curtain by blowing out, from an edge portion of the door opening, air blown by a blower of an in-vehicle air conditioner.

In this dust reducing apparatus, an air conditioning duct disposed with a blower of an in-vehicle air conditioner and a blowout portion of the air curtain are mutually communicated so that they can open and close. When the door opening is opened, an air path through which the blower sends air is switched to the blowout portion side of the air curtain, and the air curtain is formed by the air blown by the blower. Thus, in this dust reducing apparatus, the function of reducing the ingress of dust types such as pollen into the vehicle cabin through the door opening is realized without having to dispose a dedicated blower.

Also, the dust reducing apparatus pertaining to the invention can form the air curtain by blowing out, from an edge portion of the door opening, compressed air of a compressor disposed inside the vehicle.

In this dust reducing apparatus, the compressor is disposed inside the vehicle, and a discharge portion of the compressor and the blowout portion of the air curtain are mutually communicated. When the door opening is opened, the compressed air generated by the compressor is directly or indirectly supplied to the blowout portion of the air curtain, and the air curtain is formed by the compressed air. In this manner, because the dust reducing apparatus includes the compressor that generates compressed air, the dust reducing apparatus can reliably prevent the ingress of dust types into the vehicle cabin with a strong air curtain. Also, the setting of the specifications (blowout pressure, blowout speed, blowout volume, etc.) of the air curtain is easy.

The dust reducing apparatus pertaining to the invention can include an air tank that accumulates the compressed air of the compressor, and the dust reducing apparatus can form the air curtain by blowing out the compressed air in the air tank from the edge portion of the door opening.

In this dust reducing apparatus, the air tank is disposed between the compressor and the blowout portion of the air curtain, the compressed air accumulated in the air tank is supplied to the blowout portion, and the air curtain is formed. For this reason, the capacity of the compressed air is ensured, an air curtain of a sufficient strength can be formed over a predetermined period of time (i.e., the formed state can be maintained), and the ingress of dust types into the vehicle cabin can be reliably prevented. Also, because it is not necessary to start the compressor when the door opening is opened, the air curtain is rapidly formed. The dust reducing apparatus with this configuration is particularly suited for vehicles such as minivans and SUVs in which the area of the door opening is large.

The dust reducing apparatus pertaining to the invention can include an air blowout portion disposed in a pillar and a roof side portion that define an upper edge of the door opening in the vehicle body, and the dust reducing apparatus can form the air curtain by blowing out air from the air blowout portion.

This dust reducing apparatus forms the air curtain by blowing out air mainly downward from the air blowout portion disposed in the pillar (particularly a slanted pillar such as a front pillar or a rear pillar) and the roof side portion that define the upper edge of the door opening in the vehicle body. For this reason, the air current of the air curtain does not directly strike the face of a person about to enter the vehicle.

The dust reducing apparatus pertaining to the invention can control the formation timing of the air curtain on the basis of a signal from a courtesy switch that outputs a signal corresponding to the open/closed state of the door opening.

In this dust reducing apparatus, a signal is outputted from the courtesy switch for controlling the lighting and extinguishing of a light inside the vehicle in accordance with the opened/closed state of the door. When the signal inputted from the courtesy switch is a signal corresponding to the open state of the door opening, the air curtain is formed, and when the signal inputted from the courtesy switch is a signal corresponding to the closed state of the door by the door, the flow of air for forming the air curtain is stopped. Thus, the air curtain is reliably formed only when the door opening is opened, and the ingress of dust types into the vehicle cabin is prevented. Also, because the opening/closing of the door is determined using an existing switch disposed in the vehicle, it is not necessary to dispose a new door open/close detector.

In the dust reducing apparatus pertaining to the invention, the air supplier may be a blower of an in-vehicle air conditioner.

In this dust reducing apparatus, an air conditioning duct disposed with the blower of the in-vehicle air conditioner and the blowout portion of the air curtain are communicated by an air duct that can open and close. When the door opening is open, an air path through which the blower sends air is switched to the opened air duct side, and the air curtain is formed by the air blown by the blower via the air duct. Thus, in this dust reducing apparatus, the function of reducing the ingress of dust types such as pollen into the vehicle cabin through the door opening is realized without having to dispose a dedicated blower.

In the dust reducing apparatus pertaining to the invention, the air supplier may be configured to include a compressor disposed inside the vehicle.

In this dust reducing apparatus, the compressor is disposed inside the vehicle, and a discharge portion of the compressor and the blowout portion of the air curtain are mutually communicated. When the door opening is open, the compressed air generated by the compressor is directly or indirectly supplied to the blowout portion of the air curtain, and the air curtain is formed by the compressed air. In this manner, because the dust reducing apparatus includes the compressor that generates compressed air, the dust reducing apparatus can reliably prevent the ingress of dust types into the vehicle cabin with a strong air curtain. Also, the setting of the specifications (blowout pressure, blowout speed, blowout volume, etc.) of the air curtain is easy.

In the dust reducing apparatus pertaining to the invention, the air supplier may further include an air tank disposed downstream of the compressor and an open/close valve disposed downstream of the air tank, and the open/close valve may be controlled by the controller.

In this dust reducing apparatus, the air tank and the open/close valve are disposed in this order between the compressor and the blowout portion of the air curtain. In a state where the door opening is closed, the open/close valve (air flow path) is closed by the controller and the compressed air accumulates in the air tank. In a state where the door opening is open, the open/close valve is opened by the controller and the air curtain is formed. For this reason, the capacity of the compressed air is ensured, an air curtain of a sufficient strength can be formed over a predetermined period of time (i.e., the formed state can be maintained), and the ingress of dust types into the vehicle cabin can be reliably prevented. Also, because it is not necessary to start the compressor when the door opening is opened, the air curtain is rapidly formed. The dust reducing apparatus with this configuration is particularly suited for vehicles such as minivans and SUVs in which the area of the door opening is large.

In the dust reducing apparatus pertaining to the invention, the air blowout portion may be disposed in a pillar and a roof side portion defining an upper edge of the door opening in the vehicle body, and the air blowout portion may blow out air downward to form the air curtain.

This dust reducing apparatus forms the air curtain by blowing out air mainly downward from the air blowout portion disposed in the pillar (particularly a slanted pillar such as a front pillar or a rear pillar) and the roof side portion that define the upper edge of the door opening in the vehicle body. For this reason, the air current of the air curtain does not directly strike the face of a person about to enter the vehicle.

In the dust reducing apparatus pertaining to the invention, the controller may cause air to be supplied from the air supplier to the air blowout portion when a signal corresponding to the open state of the door opening is inputted from a door open/close detector that outputs a signal corresponding to the opened/closed state of the door opening by the door, and the controller may cause the supply of air from the air supplier to the air blowout portion to be stopped when a signal corresponding to the closed state of the door is inputted from the door open/close detector.

In this dust reducing apparatus, the controller causes air to be supplied from the air supplier to the air blowout portion when the signal inputted from the door open/close detector that outputs a signal corresponding to the opened/closed state of the door opening is a signal corresponding to the open state of the door opening. Thus, the air curtain is formed, and the ingress of dust types into the vehicle cabin is prevented. Additionally, the controller causes the supply of air from the air supplier to the air blowout portion to be stopped when the signal inputted from the door open/close detector is a signal corresponding to the closed state of the door opening by the door. Thus, the air curtain is reliably formed only when the door opening is open, and the ingress of dust types into the vehicle cabin is prevented. A courtesy switch for controlling the lighting and extinguishing of a light inside the cabin can be used as the door open/close detector.

The dust reducing apparatus pertaining to the invention can include an air nozzle that is disposed in the vehicle and blows out air to the outside of the vehicle body to remove dust adhering to the clothes of a person about to enter the vehicle.

In this dust reducing apparatus, a person about to enter the vehicle showers himself/herself with the air blown out (emitted) from the air nozzle to remove dust types adhering to the person's clothes. The person also passes through the air curtain to enter the vehicle. Thus, not only dust types included in the air outside the vehicle cabin, but also dust types adhering to the clothes of the passenger are prevented from ingressing into the vehicle cabin, whereby the amount of dust types inside the vehicle cabin is further reduced. It is preferable for the dust reducing apparatus to be configured so that the air forming the air curtain and the air blown out from the air nozzle are obtained from a shared air source (preferably, compressed air), whereby the number of parts can be reduced.

In the dust reducing apparatus pertaining to the invention, the air nozzle may be disposed in an edge portion along a vertical direction of the door that opens and closes a door opening in the vehicle body.

In this dust reducing apparatus, the air nozzle is disposed in the edge portion of the door that opens and closes the door opening, and air is blown out from the air nozzle disposed in the door in a state where the door opening is open. Here, because the air nozzle is disposed in the edge portion along the vertical direction of the door, or in other words because the air nozzle is disposed along the longitudinal direction of a person, the dust reducing apparatus blows out air along a wide range with respect to a standing person about to enter the vehicle, and can effectively remove dust types adhering to the person without the person having to move too much.

In the dust reducing apparatus pertaining to the invention, the air nozzle may be attachable to and detachable from the vehicle body, with the air nozzle being configured to blow out air in a state where it has been detached from the vehicle body.

In this dust reducing apparatus, because the end of the air nozzle is attachable to and detachable from the vehicle body, a person about to enter the vehicle can shower himself/herself with the air from the air nozzle while assuming a desired posture and position, and can effectively remove dust types adhering to portions of the person's clothes.

## Claims

1. A dust reducing apparatus comprising an air blowout portion (22) along a door opening (12) in a vehicle body (B) of a vehicle, which door opening (12) is opened and closed by a door (14), with the air blowout portion (22) blowing out air to form an air curtain (C) dividing the inside of a vehicle cabin from the outside when the door opening (12) is open, **characterized in that**:
the air blowout portion (22) is disposed in a pillar (16) and a roof side portion (18) that define an upper edge portion of a door opening (12) and have a hollow configuration.

2. The dust reducing apparatus of claim 1, wherein the dust reducing apparatus forms the air curtain (C) by blowing out air blown by a blower (28) of an in-vehicle air conditioner (24).

3. The dust reducing apparatus of claim 1, wherein the dust reducing apparatus forms the air curtain (C) by blowing out compressed air of a compressor (52) disposed inside the vehicle.

4. The dust reducing apparatus of claim 3, wherein the dust reducing apparatus includes an air tank (54) that accumulates the compressed air of the compressor (52) and the dust reducing apparatus forms the air curtain (C) by blowing out the compressed air in the air tank (54) from the edge portion of the door opening (12).

5. The dust reducing apparatus of any one of claims 1 to 4, wherein the formation timing of the air curtain is controlled on the basis of a signal from a courtesy switch that outputs a signal corresponding to the open/closed state of the door opening.

6. The dust reducing apparatus of claim 1 comprising:
an air supplier that supplies air to the air blowout portion (22); and
a controller (36,62) that causes air to be supplied to the air blowout portion (22) from the air supplier when the door opening (12) is opened.

7. The dust reducing apparatus of claim 6, wherein the air supplier is a blower (28) of an in-vehicle air conditioner (24).

8. The dust reducing apparatus of claim 6, wherein the air supplier is configured to include a compressor (52) disposed inside the vehicle.

9. The dust reducing apparatus of claim 8, wherein the air supplier further includes an air tank (54) disposed downstream of the compressor (52) and an open/close valve (58) disposed downstream of the air tank (54), with the open/close valve (58) being controlled by the controller (62).

10. The dust reducing apparatus of any one of claims 6 to 9, wherein
the controller (26,62) causes air to be supplied from the air supplier to the air blowout portion (22) when a signal corresponding to the open state of the door opening (12) is inputted from a door open/close detector (38) that outputs a signal corresponding to the opened/closed state of the door opening (12) by the door (14); and
the controller (26,62) causes the supply of air from the air supplier to the air blowout portion to be stopped when a signal corresponding to the closed state of the door (14) is inputted from the door open/close detector (38).

11. The dust reducing apparatus of any one of claims 1 to 10, wherein the dust reducing apparatus includes an air nozzle (72,82) that is disposed in the vehicle and blows out air to the outside of the vehicle body (B) to remove dust adhering to the clothes of a person about to enter the vehicle.

12. The dust reducing apparatus of claim 11, wherein the air nozzle is disposed in an edge portion along a vertical direction of the door (14)

13. The dust reducing apparatus of claims 11, wherein the air nozzle (82) is attachable to and detachable from the vehicle body (B); with the air nozzle (82) being configured to blow out air in a state where the air nozzle (82) has been detached from the vehicle body (B).

## Patentansprüche

1. Staubreduziervorrichtung mit einem Luftausblasabschnitt (22) entlang einer durch eine Tür (4) geöffneten und geschlossenen Türöffnung (12) in einer Fahrzeugkarosserie (B) eines Fahrzeugs, wobei der Luftausblasabschnitt (22) bei geöffneter Türöffnung (C) Luft ausbläst, um einen Luftschleier (C) zu bilden, der den Fahrzeuginnenraum von der Außenumgebung trennt, **dadurch gekennzeichnet dass**:
der Luftausblasabschnitt (22) in einer Säule (16) und in einem dachseitigen Abschnitt (18) angeordnet ist, die einen oberen Randabschnitt der Türöffnung (12) definieren und hohl ausgebildet sind.

2. Staubreduziervorrichtung nach Anspruch 1, wobei die Staubreduziervorrichtung den Luftschleier (C) bildet, indem sie von einem Gebläse (28) einer Fahrzeugklimaanlage ausgeblasene Luft ausbläst.

3. Staubreduziervorrichtung nach Anspruch 1, wobei die Staubreduziervorrichtung den Luftschleier (C) bildet, indem sie von einem im Fahrzeug angeordneten Kompressor (52) verdichtete Luft ausbläst.

4. Staubreduziervorrichtung nach Anspruch 3, wobei die Staubreduziervorrichtung einen Luftbehälter (54) umfasst, der die verdichtete Luft des Kompressors (52) sammelt, und den Luftschleier (C) bildet, indem sie die im Luftbehälter (54) befindliche verdichtete Luft aus dem Randabschnitt der Türöffnung (12) bläst.

5. Staubreduziervorrichtung nach einem der Ansprüche 1 bis 4, wobei die zeitliche Steuerung der Bildung des Luftschleiers (C) auf der Grundlage eines Signals eines Komfortschalters erfolgt, der ein Signal entsprechend dem geöffneten/geschlossenen Zustand der Türöffnung (12) ausgibt.

6. Staubreduziervorrichtung nach Anspruch 1 mit:
einer Luftzufuhreinrichtung, die Luft zum Luftausblasabschnitt (22) liefert, und
einer Steuereinrichtung (36, 62), die die Zufuhr von Luft von der Luftzufuhreinrichtung zum Luftausblasabschnitt (22) veranlasst, wenn die Türöffnung (12) geöffnet ist.

7. Staubreduziervorrichtung nach Anspruch 6, wobei die Luftzufuhreinrichtung ein Gebläse (28) einer Fahrzeugklimaanlage (24) ist.

8. Staubreduziervorrichtung nach Anspruch 6, wobei die Luftzufuhreinrichtung so aufgebaut ist, dass sie einen im Fahrzeug angeordneten Kompressor (52) umfasst.

9. Staubreduziervorrichtung nach Anspruch 8, wobei die Luftzufuhreinrichtung des Weiteren einen stromabwärts des Kompressors (52) angeordneten Luftbehälter (54) und ein stromabwärts des Luftbehälters (54) angeordnetes, über die Steuereinrichtung (62) gesteuertes Auf-/Zu-Ventil (58) umfasst.

10. Staubreduziervorrichtung nach einem der Ansprüche 6 bis 9, wobei
die Steuereinrichtung (36, 62), die Zufuhr von Luft von der Luftzufuhreinrichtung zum Luftausblasabschnitt (22) veranlasst, wenn sie von einer Türöffnungserfassungseinrichtung (38), die ein Signal entsprechend dem geöffneten/geschlossenen Zustand der Türöffnung (12) durch die Tür (14) ausgibt, ein Signal entsprechend dem geöffneten Zustand der Türöffnung (12) erhält, und
die Steuerung (36, 62) die Zufuhr von Luft von der Luftzufuhreinrichtung zum Luftausblasabschnitt (22) stoppt, wenn sie von der Türöffnungserfassungseinrichtung (38) ein Signal entsprechend dem geschlossenen Zustand der Tür (14) erhält.

11. Staubreduziervorrichtung nach einem der Ansprüche 1 bis 10, wobei die Staubreduziervorrichtung eine im Fahrzeug angeordnete Luftdüse (72, 82) umfasst, die Luft in die Außenumgebung der Fahrzeugkarosserie (B) bläst, um Staub zu entfernen, der an der Kleidung einer Person anhaftet, die im Begriff ist, in das Fahrzeug einzusteigen.

12. Staubreduziervorrichtung nach Anspruch 11, wobei die Luftdüse (82) in einem in Randabschnitt in vertikaler Richtung der Tür (14) angeordnet ist.

13. Staubreduziervorrichtung nach Anspruch 11, wobei die Luftdüse (82) an der Fahrzeugkarosserie (B) anbringbar bzw. von der Fahrzeugkarosserie (B) abnehmbar und so aufgebaut ist, dass sie in einem von der Fahrzeugkarosserie (B) abgenommenen Zustand Luft ausbläst.

## Revendications

1. Appareil de réduction de poussière comprenant une partie (22) de soufflage d'air le long d'une ouverture (12) de portière dans la carrosserie (B) d'un véhicule, laquelle ouverture (12) de portière est ouverte et fermée par une portière (14), la partie (22) de soufflage d'air soufflant l'air pour former un rideau d'air (C) séparant la partie intérieure d'un habitacle du véhicule de la partie extérieure lorsque l'ouverture (12) de portière est ouverte, **caractérisé en ce que**:
la partie (22) de soufflage d'air est disposée dans une colonne (16) et dans une partie (22) côté toit qui définit une partie de bord supérieur d'une ouverture (12) de portière et possède une configuration creuse.

2. Appareil de réduction de poussière de la revendication 1, dans lequel l'appareil de réduction de poussière forme le rideau d'air (C) en soufflant l'air soufflé par une soufflante (28) d'un climatiseur (24) à bord du véhicule.

3. Appareil de réduction de poussière de la revendication 1, dans lequel l'appareil de réduction de poussière forme le rideau d'air (C) en soufflant l'air comprimé d'un compresseur (52) disposé à l'intérieur du véhicule.

4. Appareil de réduction de poussière de la revendication 3, dans lequel l'appareil de réduction de poussière comprend un réservoir d'air (54) qui accumule l'air comprimé du compresseur (52), et l'appareil de réduction de poussière forme le rideau d'air (C) en soufflant l'air comprimé dans le réservoir d'air (54) depuis la partie de bord de l'ouverture (12) de portière.

5. Appareil de réduction de poussière de l'une quelconque des revendications 1 à 2, dans lequel l'instant de la formation du rideau d'air est commandé sur la base d'un signal provenant d'un commutateur d'accueil qui délivre en sortie un signal correspondant à l'état ouvert/fermé de l'ouverture de portière.

6. Appareil de réduction de poussière de la revendication 1 comprenant:
un dispositif d'alimentation en air qui fournit l'air à la partie (22) de soufflage d'air, et
une unité de commande (36) qui permet à l'air d'être alimenté à la partie (22) de soufflage d'air depuis le dispositif d'alimentation en air lorsque l'ouverture (12) de portière est ouverte.

7. Appareil de réduction de poussière de la revendication 6, dans lequel le dispositif d'alimentation en air est une soufflante (28) d'un climatiseur (24) à bord du véhicule.

8. Appareil de réduction de poussière de la revendication 6, dans lequel le dispositif d'alimentation en air est configuré pour comporter un compresseur (52) disposé à l'intérieur du véhicule.

9. Appareil de réduction de poussière de la revendication 8, dans lequel le dispositif d'alimentation en air comprend en plus un réservoir d'air (54) disposé en aval du compresseur (52) et une soupape (58) d'ouverture/fermeture disposée en aval du réservoir d'air (54), la soupape (58) d'ouverture/fermeture étant commandée par l'unité de commande (62).

10. Appareil de réduction de poussière de l'une quelconque des revendications 7 à 11, dans lequel
l'unité de commande (62) permet à l'air d'être alimenté depuis le dispositif d'alimentation en air à la partie (22) de soufflage d'air lorsqu'un signal correspondant à l'état ouvert de l'ouverture (12) de portière est introduit depuis un détecteur d'ouverture/fermeture de portière qui délivre en sortie un signal correspondant à l'état ouvert/fermé de l'ouverture (12) de portière par la portière (14), et
l'unité de commande (62) permet à l'alimentation d'air depuis le dispositif d'alimentation en air à la partie (22) de soufflage d'air d'être arrêtée lorsqu'un signal correspondant à l'état fermé de la portière (14) est introduit depuis le détecteur d'ouverture/fermeture de la portière.

11. Appareil de réduction de poussière de l'une quelconque des revendications 1 à 10, dans lequel l'appareil de réduction de poussière comprend une buse d'air (72, 82) qui est disposée dans le véhicule et qui souffle de l'air à la partie extérieure de la carrosserie (B) du véhicule afin d'éliminer de la poussière adhérant aux vêtements d'une personne qui s'apprête à monter dans le véhicule.

12. Appareil de réduction de poussière des revendications 13 et 14, dans lequel la buse d'air est disposée dans une partie de bord le long d'une direction verticale d'une portière (14).

13. Appareil de réduction de poussière des revendications 13 et 14, dans lequel la buse d'air peut être attachée à et détachée de la carrosserie (B) du véhicule, la buse d'air étant configurée pour souffler l'air dans un état où la buse d'air a été détachée de la carrosserie (B) du véhicule.
